# FASCICULE DE BREVET EUROPEEN

(11) **EP 3 698 198 B1**
(45) Date de publication et mention de la délivrance du brevet: **05.08.2026**
(21) Numéro de dépôt: 18785408.8
(22) Date de dépôt: 17.10.2018
(51) Int. Cl.: G02B 27/01, G02F 1/1335

(54) **DISPOSITIF DE GÉNÉRATION D'IMAGES ET AFFICHEUR TÊTE HAUTE COMPRENANT UN TEL DISPOSITIF**
BILDGEBUNGSVORRICHTUNG UND HEAD-UP-ANZEIGE MIT SOLCH EINER VORRICHTUNG
IMAGING GENERATING DEVICE AND HEAD-UP DISPLAY COMPRISING SUCH A DEVICE

(30) Priorité: 17.10.2017 FR 1759744
(43) Date de publication de la demande: 26.08.2020
(73) Titulaire: Valeo Comfort and Driving Assistance, 94000 Créteil (FR)
(72) Inventeur: GACHE, Stephane, 94046 Créteil Cedex (FR)
(74) Mandataire: Delplanque, Arnaud
(86) Numéro de dépôt international: PCT/EP2018/078464
(87) Numéro de publication internationale: WO 2019/077009

(56) Documents cités:
- WO-A1-2017/065819
- WO-A1-2017/123259
- WO-A1-2017/131816
- US-A1- 2010 238 685
- US-A1- 2017 090 096

## Description

### DOMAINE TECHNIQUE AUQUEL SE RAPPORTE L'INVENTION

La présente invention concerne de manière générale le domaine des dispositifs de génération d'images.

Elle concerne en particulier un dispositif de génération d'images comprenant :
- une matrice de modulateurs optiques, et
- une plaque qui comprend une face avant dirigée vers ladite matrice de modulateurs optique et une face arrière, et qui comprend des éléments diffractifs.

Elle concerne également un afficheur tête haute équipé d'un tel dispositif de génération d'images.

### ARRIERE-PLAN TECHNOLOGIQUE

On connaît des dispositifs de génération d'images comprenant une matrice de modulateurs optiques et une plaque comprenant des éléments diffractifs.

Les éléments diffractifs permettent de générer des faisceaux ayant respectivement des orientations différentes qui peuvent ainsi produire, après traversée de la matrice de modulateurs optiques, une image stéréoscopique.

Il est prévu dans ce contexte que la plaque comprenant les éléments diffractifs soit utilisée également en tant que guide de lumière, ce qui implique une conception particulière de l'ensemble qui n'est pas toujours adaptée aux situations rencontrées. Les documents suivants font partie l'état de la technique antérieure utile à la compréhension de l'invention: WO 2017/123259 A1, WO 2017/131816 A1, US 2010/238685 A1, US 2017/090096 A1.

### OBJET DE L'INVENTION

Dans ce contexte, la présente invention propose un dispositif de génération d'images selon la revendication 1 et qui notamment comprend une matrice de modulateurs optiques, et une plaque qui comprend une face avant dirigée vers ladite matrice de modulateurs optique et une face arrière, ladite plaque comprenant des éléments diffractifs, caractérisé en ce qu'un dispositif de rétroéclairage est apte à générer un faisceau lumineux en direction de ladite face arrière.

L'utilisation d'un dispositif de rétroéclairage de la face arrière de la plaque permet une plus grande souplesse dans la conception de l'ensemble. Par ailleurs, la face arrière de la plaque ayant une surface plus importante que sa tranche, le flux lumineux incident sur cette face arrière pourra être de puissance élevée, tout en limitant les risques d'échauffement au niveau de la plaque.

La plaque comprend au moins une première structure diffractive agencée pour transmettre la lumière dans une première direction et une seconde structure diffractive agencée pour transmettre la lumière dans une seconde direction, différente de la première direction.

L'utilisation combinée des structures diffractives de la plaque d'illumination (qui émettent chacune dans une direction spécifique) et des modulateurs optiques permet de générer des faisceaux lumineux dans chacune des deux directions qui correspondent respectivement à deux images, et ainsi d'obtenir un effet de stéréoscopie.

D'autres caractéristiques avantageuses et non limitatives du dispositif de génération d'images conforme à l'invention sont les suivantes :
- le dispositif de génération d'images comporte un filtre situé entre la plaque et le dispositif de rétroéclairage ;
- le dispositif de génération d'images comporte un polariseur situé entre la plaque et le dispositif de rétroéclairage ;
- le dispositif de génération d'images comporte un diffuseur situé entre la plaque et le dispositif de rétroéclairage ;
- le dispositif de rétroéclairage comprend une source lumineuse ;
- le dispositif de rétroéclairage comprend un réflecteur ;
- le filtre est porté par la plaque ;
- le polariseur est porté par la plaque ;
- le diffuseur est porté par la plaque.

L'invention propose également un afficheur tête haute comprenant un dispositif de génération d'images tel que proposé ci-dessus, conçu pour produire un faisceau lumineux, et un système de projection agencé pour projeter ledit faisceau lumineux en direction d'une lame partiellement transparente.

### DESCRIPTION DETAILLEE D'UN EXEMPLE DE REALISATION

La description qui va suivre en regard des dessins annexés, donnés à titre d'exemple non limitatif, fera bien comprendre en quoi consiste l'invention et comment elle peut être réalisée.

Sur les dessins annexés :
- la figure 1 représente schématiquement un afficheur tête haute selon l'invention ;
- la figure 2 représente un schéma de principe d'un dispositif de génération d'images conforme à l'invention ;
- la figure 3 représente un exemple de mise en œuvre d'un tel dispositif de génération d'images ; et
- la figure 4 représente, de manière schématique, un exemple de détail du dispositif de génération d'images des figures 1 et 2.

En préliminaire, on notera que les éléments identiques ou similaires des différents modes de réalisation de l'invention représentés sur les différentes figures seront, dans la mesure du possible, référencés par les mêmes signes de référence et ne seront pas décrits à chaque fois.

Sur les figures, les proportions ne sont pas respectées afin de faire mieux ressortir la constitution des éléments présentés ci-dessous à titre d'exemples.

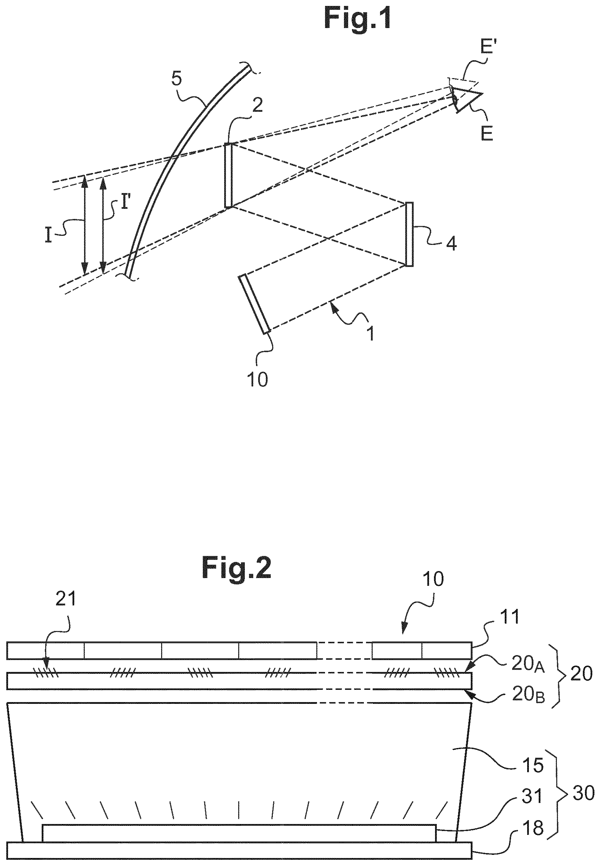

Sur la figure 1, on a schématiquement représenté les éléments principaux d'un afficheur tête haute 1 destiné à équiper un véhicule, par exemple un véhicule automobile.

Comme expliqué ci-après, un tel afficheur tête haute est adapté à créer une image virtuelle I, I' dans le champ de vision d'un conducteur du véhicule pour chacun des deux yeux E, E' du conducteur. Le conducteur peut ainsi voir une image stéréoscopique sans avoir à détourner le regard de la route qu'il emprunte. Cette image stéréoscopique contient par exemple des informations relatives au fonctionnement du véhicule, des informations d'assistance à la conduite, des informations relatives à la navigation, *etc.*

L'afficheur tête haute 1 comprend une lame partiellement transparente 2 placée dans le champ de vision du conducteur, un dispositif de génération d'images 10 adapté à générer un faisceau lumineux et un dispositif de projection d'images 4 adapté à renvoyer, en direction de la lame partiellement transparente 2, le faisceau lumineux généré par le dispositif de génération d'images 10.

Plus précisément, la lame partiellement transparente 2 est ici dédiée à l'afficheur tête haute 1, placée entre le pare-brise 5 du véhicule et les yeux E, E' du conducteur.

Cette lame partiellement transparente 2 présente un pouvoir de réflexion au moins égal à 20%, ce qui permet à l'utilisateur de voir au travers de la lame la route empruntée par le véhicule, tout en bénéficiant d'un contraste élevé permettant de voir l'image affichée. De manière alternative, le pare-brise 5 du véhicule équipé dudit afficheur peut être utilisé en lieu et place de la lame partiellement transparente 2.

Par ailleurs, ici, le dispositif de projection d'images 4 comprend un miroir de repliement agencé de manière à réfléchir les images générées par le dispositif de génération d'images 10 en direction de la lame partiellement transparente 2. Ici, ledit miroir de repliement est un miroir plan.

En variante, le dispositif de projection d'images 4 pourrait comprendre une pluralité de miroirs et/ou d'autres éléments optiques tels que par exemple une lentille.

Le dispositif de génération d'images 10 montré à la figure 2 comprend une matrice de modulateurs optiques 11, une plaque 20, et un dispositif de rétroéclairage 30 apte à générer un faisceau lumineux.

La plaque 20 comprend une face avant 20_{A} dirigée vers ladite matrice de modulateurs optiques 11 et une face arrière 20_{B}. La plaque comprend également des éléments diffractifs 21.

Le dispositif de rétroéclairage génère le faisceau lumineux en direction de la face arrière 20_{B}. Précisément, la plaque 20 s'étend transversalement à une direction principale du faisceau lumineux généré par le dispositif de rétroéclairage 20 (le plan d'extension de la plaque 20 étant ici perpendiculaire à la direction principale du faisceau lumineux).

Ainsi, le faisceau lumineux généré par le dispositif de rétroéclairage 20 est incident sur la face arrière 20_{B} de la plaque 20 (après traversée éventuelle d'autres éléments optiques comme expliqué ci-après), entre dans la plaque 20 à travers cette face arrière 20_{B} et se propage dans la plaque 20 ( selon une direction identique à la direction principale susmentionnée) jusqu'à la face avant 20_{A} de la plaque 20.

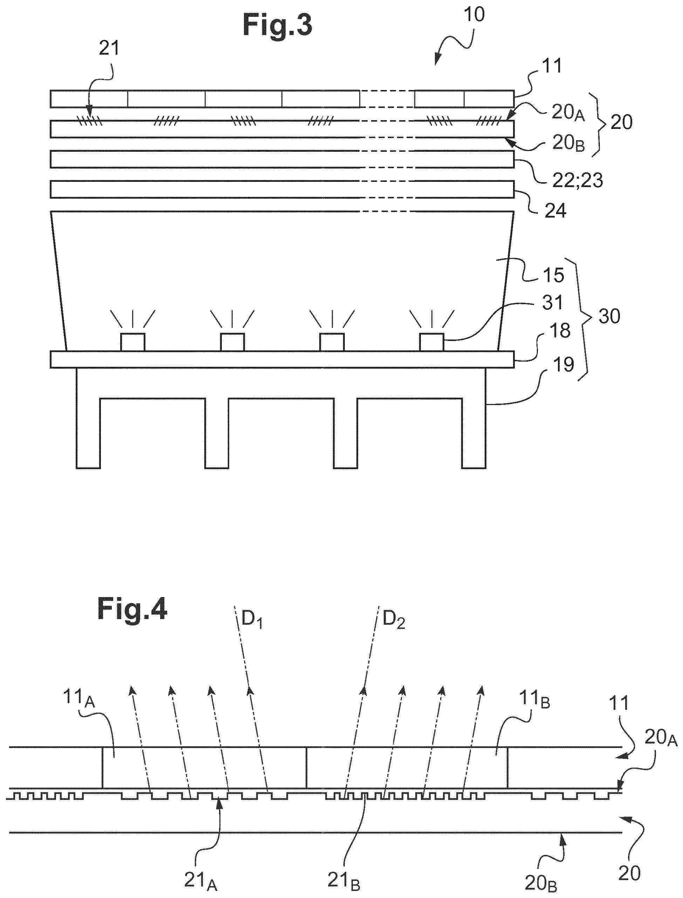

Le dispositif de rétroéclairage 30 comprend par exemple une source de lumière 31 (ici au moins une diode électroluminescente et, en général, une pluralité de diodes électroluminescentes, visible sur la figure 3) et un réflecteur 15.

Dans un exemple de réalisation (visible figure 4), la plaque 20 comporte, sur sa face avant 20_{A} dirigée vers la matrice 11 de modulateurs optiques 11_{A}, 11_{B}, une pluralité de structures diffractives 21_{A}, 21_{B} adaptées chacune à transmettre la lumière à l'extérieur de la plaque 20 dans une direction donnée D₁, D₂.

On pourra par exemple se référer à ce sujet au document US 2016/033 706.

Les structures diffractives 21_{A}, 21_{B} sont disposées de manière à former une matrice de structures diffractives 21_{A}, 21_{B} de sorte que chaque structure diffractive puisse être située au droit d'un modulateur optique 11_{A}, 11_{B} de la matrice de modulateurs optiques 11.

Chaque structure diffractive 21_{A}, 21_{B} est par exemple réalisée au moyen d'un réseau de diffraction dont les éléments sont séparés par un pas adapté de sorte que la structure diffractive concernée 21_{A}, 21_{B} transmet la lumière dans une direction donnée D₁, D₂ comme déjà indiqué.

Chaque réseau de diffraction peut être réalisé (comme représenté de manière schématique en figure 4) par un ensemble de microsillons parallèles (ici formés dans la face de la plaque 20_{A} dirigée vers la matrice de modulateurs optiques 11) dont le pas et l'orientation permettent une transmission de la lumière en sortie de la plaque 20 dans la direction donnée D₁, D₂ susmentionnée. En variante, certains au moins des réseaux de diffraction pourraient être réalisés par un ensemble de reliefs parallèles.

Afin d'obtenir un effet diffractif, le pas du réseau de diffraction est de l'ordre de grandeur de la longueur d'onde utilisée (ici la longueur d'onde principale de la source de lumière 11) : le pas du réseau est par exemple compris entre 100 nm et 1 µm.

La matrice de modulateurs optiques 11 est par exemple réalisée au moyen d'un écran à cristaux liquides (ou LCD pour *"Liquid Crystal Display*")*,* éventuellement un écran à cristaux liquides à transistors en couche mince (ou TFT-LCD pour "*Thin Film Transistor Liquid Crystal Display*")*.* Dans ce cas, chaque modulateur optique 11_{A}, 11_{B} est formé par une cellule à cristaux liquides.

La matrice de modulateurs optiques 11 est placée relativement à la plaque 20 de sorte que la lumière transmise par une structure diffractive donnée 21_{A}, 21_{B} (avec une direction D₁, D₂ donnée comme déjà indiqué) traverse un modulateur optique 11_{A}, 11_{B} donné. Autrement dit, comme bien visible en figure 4, chaque structure diffractive 21_{A}, 21_{B} est associée à un modulateur optique 11_{A}, 11_{B}.

Chaque modulateur optique 11_{A}, 11_{B} peut ainsi faire varier la quantité de lumière transmise à travers la matrice de modulateurs optiques 11 en provenance de la structure diffractive 21_{A}, 21_{B} associée au modulateur optique 11_{A}, 11_{B} concerné.

La transmittance de chacun des modulateurs optiques 11_{A}, 11_{B} peut être commandée par une unité de commande.

Une unité de commande (non représentée sur les figures) peut ainsi commander la transmittance de chacun des modulateurs optiques 11_{A}, 11_{B} de manière à générer dans une première direction D₁ un faisceau lumineux correspondant à une première image L et dans une seconde direction D₂ un faisceau lumineux correspondant à une seconde image R.

Précisément, l'unité de commande commande la transmittance de chacun des modulateurs optiques 11_{A} situés au droit d'une structure diffractive 21_{A} émettant la lumière dans la première direction D₁ afin de former un faisceau lumineux qui corresponde à la première image L. (En pratique, la transmittance de chaque modulateur optique 11_{A} peut correspondre à la valeur d'un pixel associé dans la première image L.)

De même, l'unité de commande commande la transmittance de chacun des modulateurs optiques 11_{B} situés au droit d'une structure diffractive 21_{B} émettant la lumière dans la seconde direction D₂ afin de former un faisceau lumineux qui corresponde à la seconde image R. (En pratique, la transmittance de chaque modulateur optique 11_{B} peut correspondre à la valeur d'un pixel associé dans la seconde image R.)

Dans le mode de réalisation décrit ici, on prévoit seulement deux directions distinctes D₁, D₂ d'émission de la lumière par les structures diffractives, le faisceau lumineux ayant la première direction D₁ étant destiné à l'œil gauche du conducteur (après projection par le dispositif de projection 4 et réflexion sur la lame partiellement transparente 2), tandis que le faisceau lumineux ayant la seconde direction D₂ est destiné à l'œil droit du conducteur.

On prévoit par exemple pour ce faire de placer l'assemblage de la plaque 20 et de la matrice de modulateurs optiques 11 au niveau du plan objet du dispositif de projection 4.

On remarque par ailleurs que l'on rencontre alternativement sur la plaque 20 (dans au moins une direction comme représenté en figure 4) une structure diffractive 21_{A} (transmettant la lumière selon la première direction D₁), puis une structure diffractive 21_{B} (transmettant la lumière selon la seconde direction D₂), et ainsi de suite. La matrice 11 de modulateurs optiques 11_{A}, 11_{B} est donc commandée par l'unité de commande en intercalant les commandes destinées à produire un faisceau lumineux correspondant à la première image L (commandes des modulateurs optiques 11_{A} situés au droit d'une structure diffractive 21_{A} transmettant la lumière dans la première direction D₁) et les commandes destinées à produire un faisceau lumineux correspondant à la seconde image R (commandes des modulateurs optiques 11_{B} situés au droit d'une structure diffractive 21_{B} transmettant la lumière dans la seconde direction D₂).

L'invention ne se limite pas à cet exemple de réalisation, les structures diffractives peuvent être de tailles et formes différentes, afin de transmettre la lumière dans d'autres directions données.

Le dispositif de rétroéclairage 30 peut comporter un ensemble de réflexion 15 réalisé d'une pièce ; l'ensemble de réflexion 15 possède une paroi périphérique externe qui définit au moins une cavité réfléchissante. L'ensemble de réflexion 15 comprend au moins un moyen réfléchissant (ou surface réfléchissante) qui participe au rétroéclairage de la matrice de modulateurs optiques 11. Ce moyen réfléchissant peut être en pratique au moins une paroi interne (réfléchissante) de l'ensemble de réflexion 15. Autrement dit, l'ensemble de réflexion 15 comprend des surfaces (réfléchissantes) conçues pour réfléchir les rayons lumineux issus de la source lumineuse 31 en direction de la face arrière 20_{B}.

La source lumineuse 31 est montée dans le dispositif de génération d'images 10 de façon à être entourée par la paroi périphérique de l'ensemble de réflexion 15 et à émettre de la lumière à destination de la face arrière 20_{B} de la plaque 20, directement ou après réflexion sur les moyens réfléchissants (ou surfaces réfléchissantes) de l'ensemble de réflexion 15.

Une plaque de support 18 peut être montée sur un dissipateur thermique 19 afin d'évacuer la chaleur générée en particulier par la source lumineuse 31 et d'éviter ainsi la surchauffe du dispositif de génération d'images 10. Le dissipateur thermique 19 comprend par exemple une plaque juxtaposée à la plaque de support et pourvue d'ailettes de refroidissement.

Sur la figure 3, la source lumineuse 31 est composée de diodes électroluminescentes (ou LED pour *Light Emitting Diodes*) montées sur une plaque de support 18. Cette plaque de support 18 est ici un circuit imprimé (ou PCB pour *Printed Circuit Board*)*.* Le circuit imprimé 18 permet à la fois le support physique des diodes électroluminescentes 31 et leur connexion électrique à une source d'alimentation électrique (non représentée).

Le dispositif de génération d'images 10 comprend ici en outre un diffuseur 24 interposé entre la plaque 20 et le dispositif de rétroéclairage 30. Ce diffuseur 24 se présente sous la forme d'une lame, située entre les diodes électroluminescentes 31 et les modulateurs optiques 11**,** apte à homogénéiser la lumière provenant des diodes électroluminescentes 31. L'homogénéisation de la lumière permet une bonne répartition de la lumière sur chacun des modulateurs optiques 11. Le diffuseur 24 permet en outre de masquer l'intérieur du dispositif 10.

Le dispositif de génération d'images 10 peut comprendre en outre un polariseur 23 et/ou un filtre 22. Le polariseur 23 ou le filtre 22 sont situés entre la plaque 20 et le dispositif de rétroéclairage 30. Dans l'exemple de réalisation visible figure 3, le polariseur 23 ou le filtre 22 sont situés entre le diffuseur 24 et la plaque 20. De plus, le polariseur 23 peut être directement inclus lors de la conception de chaque modulateur optique 11, formant une première couche (dirigée vers l'ensemble de réflexion 15).

En variante, le filtre 22, le polariseur 23 ou le diffuseur 24 peuvent être réalisés directement sur la face arrière 20_{B} de la plaque 20. Ainsi les fonctions assurées par le filtre 22, le polariseur 23 et le diffuseur 24 peuvent être comprises dans la plaque 20, assurant une simplicité de montage et une réduction des coûts de fabrication.

Selon une variante envisageable, la source lumineuse 31 peut être montée directement sur le dissipateur thermique 19. La source lumineuse 31 est alimentée électriquement par un système externe au dispositif de génération d'images 10. On peut par exemple prévoir dans ce cas que des connecteurs d'alimentation (non représentés) de chaque diode électroluminescente 31 s'étendent à travers le dissipateur thermique 19 et soient ainsi accessibles de l'extérieur du dispositif de génération d'images 10.

## Revendications

1. Dispositif de génération d'images (10) comprenant :
- une matrice (11) de modulateurs optiques (11A, 11B), et
- une plaque (20) qui comprend une face avant (20_{A}) dirigée vers ladite matrice (11) de modulateurs optique (11A, 11B) et une face arrière (20_{B}), ladite plaque (20) comprenant des éléments diffractifs (21),
- un dispositif de rétroéclairage (30) est apte à générer un faisceau lumineux en direction de ladite face arrière (20_{B}),
le plan d'extension de la plaque (20) étant perpendiculaire à la direction principale du faisceau lumineux de sorte que le faisceau lumineux est incident sur la face arrière (20B) de la plaque (20), entre dans la plaque (20) à travers cette face arrière (20B) et se propage dans la paque (20) jusqu'à la face avant (20A) de la plaque (20) selon une direction identique à la direction principale et vers les éléments diffractifs (21),
ladite plaque (20) comprenant des éléments diffractifs (21) comprend alternativement une première structure diffractive (21A), transmettant la lumière selon une première direction (D1), puis une structure diffractive (21B), transmettant la lumière selon une seconde direction (D2) et ainsi de suite, les structures diffractives (21A, 21B) étant disposées de manière à former une matrice de structures diffractives (21A, 21B) de sorte que chaque structure diffractive (21A, 21B) est située au droit d'un modulateur optique (11A, 11B) de la matrice de modulateur optique (11) ;
la matrice (11) de modulateurs optiques (11A, 11B) est donc adaptée à être commandée par une unité de commande commandant la transmittance des modulateurs optiques (11A, 11B) en intercalant les commandes destinées à produire un faisceau lumineux dans la première direction (D1) correspondant à une première image (L) et les commandes destinées à produire un faisceau lumineux dans la seconde direction (D2) correspondant à une seconde image (R).

2. Dispositif (10) selon la revendication 1, dans lequel le dispositif de génération d'images (10) comporte un filtre (22) situé entre la plaque (20) et le dispositif de rétroéclairage (30).

3. Dispositif (10) selon la revendication 2, dans lequel le filtre (22) est porté par la plaque (20).

4. Dispositif (10) selon l'une des revendications précédentes, dans lequel le dispositif de génération d'images (10) comporte un polariseur (23) situé entre la plaque (20) et le dispositif de rétroéclairage (30).

5. Dispositif (10) selon la revendication 4, dans lequel le polariseur (23) est porté par la plaque (20).

6. Dispositif (10) selon l'une des revendications précédentes, dans lequel le dispositif de génération d'images (10) comporte un diffuseur (24) situé entre la plaque (20) et le dispositif de rétroéclairage (30).

7. Dispositif (10) selon la revendication 6, dans lequel le diffuseur (24) est porté par la plaque (20).

8. Dispositif (10) selon l'une des revendications précédentes, dans lequel ledit dispositif de rétroéclairage (30) comprend une source lumineuse (31).

9. Dispositif (10) selon l'une des revendications précédentes, dans lequel ledit dispositif de rétroéclairage (30) comprend un réflecteur (32).

10. Afficheur tête haute (1) comprenant un dispositif de génération d'image (10) selon l'une des revendications précédentes, conçu pour produire un faisceau lumineux, et un système de projection (4) conçu pour projeter le faisceau lumineux produit en direction d'une lame partiellement transparente (2).

## Patentansprüche

1. Bilderzeugungsvorrichtung (10), umfassend:
- eine Matrix (11) von optischen Modulatoren (11A, 11B), und
- eine Platte (20), die eine Vorderseite (20A), die zu der Matrix (11) von optischen Modulatoren (11A, 11B) gerichtet ist, und eine Rückseite (208) umfasst, wobei die Platte (20) diffraktive Elemente (21) umfasst,
- eine Hintergrundbeleuchtungsvorrichtung (30), die geeignet ist, einen Lichtstrahl in Richtung der Rückseite (20_{B}) zu erzeugen, wobei die Ausdehnungsebene der Platte (20) senkrecht zur Hauptrichtung des Lichtstrahls ist, sodass der Lichtstrahl auf die Rückseite (20B) der Platte (20) einfällt, in die Platte (20) durch diese Rückseite (20B) eintritt und sich in der Platte (20) bis zur Vorderseite (20A) der Platte (20) in einer Richtung ausbreitet, die mit der Hauptrichtung identisch ist und zu den diffraktiven Elementen (20) führt, wobei die Platte (20), die diffraktive Elemente (21) umfasst, abwechselnd eine erste diffraktive Struktur (21A), die Licht in eine erste Richtung (D1) überträgt, und dann eine diffraktive Struktur (21B), die Licht in eine zweite Richtung (D2) überträgt, und so weiter umfasst, wobei die diffraktiven Strukturen (21A, 21B) so angeordnet sind, dass sie eine Matrix von diffraktiven Strukturen (21A, 21B) bilden, sodass jede diffraktive Struktur (21A, 21B) direkt vor einem optischen Modulator (11A, 11B) der Matrix von optischen Modulatoren (11) angeordnet ist;
die Matrix (11) von optischen Modulatoren (11A, 11B) ist daher angepasst, um von einer Steuereinheit gesteuert zu werden, die die Transmittanz der optischen Modulatoren (11A, 11B) steuert, indem sie die Befehle zur Erzeugung eines Lichtstrahls in einer ersten Richtung (D1), die einem ersten Bild (L) entspricht, und die Befehle zur Erzeugung eines Lichtstrahls in einer zweiten Richtung (D2), die einem zweiten Bild (R) entspricht, abwechselnd einfügt.

2. Vorrichtung (10) nach Anspruch 1, wobei die Bilderzeugungsvorrichtung (10) einen Filter (22) aufweist, der zwischen der Platte (20) und der Hintergrundbeleuchtungsvorrichtung (30) angeordnet ist.

3. Vorrichtung (10) nach Anspruch 2, wobei der Filter (22) von der Platte (20) getragen wird.

4. Vorrichtung (10) nach einem der vorhergehenden Ansprüche, wobei die Bilderzeugungsvorrichtung (10) einen Polarisator (23) aufweist, der zwischen der Platte (20) und der Hintergrundbeleuchtungsvorrichtung (30) angeordnet ist.

5. Vorrichtung (10) nach Anspruch 4, wobei der Polarisator (23) von der Platte (20) getragen wird.

6. Vorrichtung (10) nach einem der vorhergehenden Ansprüche, wobei die Bilderzeugungsvorrichtung (10) einen Diffusor (24) aufweist, der zwischen der Platte (20) und der Hintergrundbeleuchtungsvorrichtung (30) angeordnet ist.

7. Vorrichtung (10) nach Anspruch 6, wobei der Diffusor (24) von der Platte (20) getragen wird.

8. Vorrichtung (10) nach einem der vorhergehenden Ansprüche, wobei die Hintergrundbeleuchtungsvorrichtung (30) eine Lichtquelle (31) umfasst.

9. Vorrichtung (10) nach einem der vorhergehenden Ansprüche, wobei die Hintergrundbeleuchtungsvorrichtung (30) einen Reflektor (32) umfasst.

10. Head-up-Display (1), umfassend eine Bilderzeugungsvorrichtung (10) nach einem der vorhergehenden Ansprüche, die zur Erzeugung eines Lichtstrahls konzipiert ist, und ein Projektionssystem (4), das konzipiert ist, um den erzeugten Lichtstrahl in Richtung einer teilweise transparenten Scheibe (2) zu projizieren.

## Claims

1. Image generation device (10) comprising:
- a matrix (11) of optical modulators (11A, 11B), and
- a plate (20) that includes a front face (20A) directed toward said matrix (11) of optical modulators (11A, 11B) and a rear face (208), said plate (20) comprising diffractive elements (21),
- a backlighting device (30) is capable of generating a light beam toward said rear face (20_{B}), the extension plane of the plate (20) being perpendicular to the main direction of the light beam so that the light beam is incident on the rear face (20B) of the plate (20), enters the plate (20) through this rear face (20B) and propagates in the plate (20) to the front face (20A) of the plate (20) in a direction identical to the main direction and toward the diffractive elements (20), said plate (20) comprising diffractive elements (21) alternately includes a first diffractive structure (21A), transmitting light in a first direction (D1), then a diffractive structure (21B), transmitting light in a second direction (D2) and so on, the diffractive structures (21A, 21B) being arranged to form a matrix of diffractive structures (21A, 21B) so that each diffractive structure (21A, 21B) is located directly in front of an optical modulator (11A, 11B) of the matrix of optical modulators (11);
the matrix (11) of optical modulators (11A, 11B) is therefore adapted to be controlled by a control unit controlling the transmittance of the optical modulators (11A, 11B) by interspersing commands intended to produce a light beam in a first direction (D1) corresponding to a first image (L) and commands intended to produce a light beam in a second direction (D2) corresponding to a second image (R).

2. Device (10) according to claim 1, wherein the image generation device (10) includes a filter (22) located between the plate (20) and the backlighting device (30).

3. Device (10) according to claim 2, wherein the filter (22) is carried by the plate (20).

4. Device (10) according to any one of the preceding claims, wherein the image generation device (10) includes a polarizer (23) located between the plate (20) and the backlighting device (30).

5. Device (10) according to claim 4, wherein the polarizer (23) is carried by the plate (20).

6. Device (10) according to any one of the preceding claims, wherein the image generation device (10) includes a diffuser (24) located between the plate (20) and the backlighting device (30).

7. Device (10) according to claim 6, wherein the diffuser (24) is carried by the plate (20).

8. Device (10) according to any one of the preceding claims, wherein said backlighting device (30) comprises a light source (31).

9. Device (10) according to any one of the preceding claims, wherein said backlighting device (30) comprises a reflector (32).

10. Head-up display (1) comprising an image generation device (10) according to any one of the preceding claims, designed to produce a light beam, and a projection system (4) designed to project the produced light beam toward a partially transparent plate (2).
